# EUROPEAN PATENT APPLICATION

(11) **EP 1 075 100 A1**
(43) Date of publication of application: **07.02.2001**
(21) Application number: 00904074.2
(22) Date of filing: 22.02.2000
(51) Int. Cl.: H04J 3/00, H04L 12/56, H04N 7/08, H04N 7/24

(54) **VARIABLE-LENGTH FRAME TRANSMISSION DEVICE, AND VARIABLE-LENGTH FRAME TRANSMISSION METHOD**

(30) Priority: 01.03.1999 JP 5303999
(71) Applicant: MATSUSHITA ELECTRIC INDUSTRIAL CO., LTD., Kadoma-shi, Osaka 571-8501 (JP)
(72) Inventor: IDO, Daiji, Kanazawa-ku, Yokohama-shi, Kanagawa 236- (JP)
(74) Representative: Grünecker, Kinkeldey, Stockmair & Schwanhäusser Anwaltssozietät
(86) International application number: JP0000979
(87) International publication number: WO0052859

(57) **Abstract**

In the cases where a SB insertion judgement section 124 multiplexes voice information to next frame, the SB insertion judgement section 124 calculates multiplex available length of video information while subtracting length of a synchronization code word and a header from distance between a termination of a front frame and multiplex start position of voice information. The SB insertion judgement section judges that it is necessary to multiplex stuffing bit sequence when length of important information is longer than multiplex available length. In this case, a frame configuration section inserts redundant bit in between terminal position of the front frame and the front position of the synchronization code word. Thereby, it is capable of preventing the matter that the important information is divided into a plurality of frames on the occasion of multiplexing transmission data.

## Description

### Technical Field

The present invention relates to a variable length frame transmission apparatus and a variable length frame transmission method employed for a communication system such as data communication, multi media communication, and so forth, which transmit data of a variable length frame.

### Background Art

A system of MPEG-4 (ISO/IEC14496) is employed in a communication system such as data communication, multi media communication, and so forth. In the system of MPEG-4 (ISO/IEC14496), the signal representing motion picture, acoustic signal, and so forth are compressed to be coded.

In the system of MPEG-4, there are prepared an INTER coding mode for coding a difference between a different frame about time and a relevant frame, and an INTRA coding mode for coding a frame while employing information of only a relevant frame.

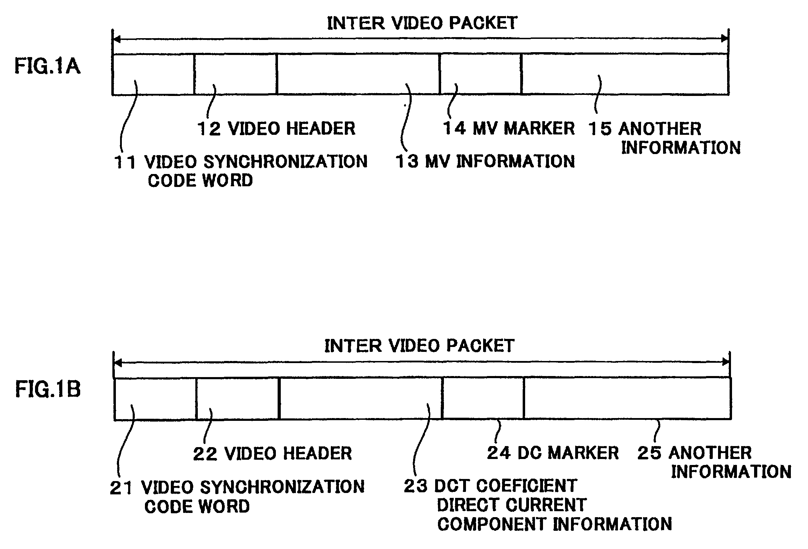

FIG. 1A is a configuration view of a video packet coded sequence (hereinafter referred to as INTER video packet) of INTER coded mode. FIG. 1B is a configuration view of a video packet coded sequence (hereinafter referred to as INTRA video packet) of INTRA coded mode. As indicated in FIG. 1A and FIG. 1B, in the INTER video packet as well as the INTRA video packet, video synchronization code words 11, 21 and video headers 12, 22 are allocated to the front position thereof. Continuously, a code sequence in which the motion picture information is coded is allocated just behind.

The video synchronization code words 11, 21 are known between a transmission side and a reception side. The video synchronization code words 11, 21 are employed in order to detect the front position of the video packet on the occasion of establishment of synchronization.

Information which includes matter indicating whether following code information sequence is the INTER video packet or following code information sequence is the INTRA video packet, and so forth are written in the video headers 12, 22.

At this point, motion vector information 13 (hereinafter referred to as MV information) is included in the INTER video packet. While, direct-current component information 23 of discrete cosine transform (hereinafter referred to as DCT) coefficient which is obtained in accordance with the discrete cosine transform is included in the INTRA video packet.

In data partitioning mode which is one of function of the MPEG-4, it is established that important information such as the MV information 13 or the direct-current component information 23 of the DCT coefficient or so forth is allocated behind the video headers 12, 22. In the data partitioning mode, it is also established that MV marker 14 representing a termination of the MV information 13 is multiplexed to be allocated just behind the MV information, and that DC marker 24 representing a termination of the direct-current component information 23 of the DCT coefficient is multiplexed to be allocated just behind the direct-current component information 23 of the DCT coefficient. Then, in the video packet, another information 15, 25 are multiplexed to be allocated behind the MV marker 14, or the DC marker 24.

The important information is allocated behind the video header so that the important information is difficult to be influenced from the error, even though the error easy to occur because environment of propagation path is bad, therefore, it is capable of improving error resistance function. For instance, when the transmission side transmits the INTER video packet, if the reception side is capable of receiving the video packet to the extent of the MV information correctly, it is capable of reproducing picture with a small amount of distortion due to error concealing technique.

In the system of MPEG-4, payload is formed in such a way of multiplexing the voice information to the above motion picture information periodically. Then, the payload is sectioned properly. The synchronization code word as well as the header are multiplexed to the front position of the sectioned payload. According to this processing, respective variable length frames with different lengths are configured to be transmitted. These are described in the official report of the Japanese Patent Application Laid Open No. HEI 10-210021 or so forth as the conventional variable length frame transmission apparatus.

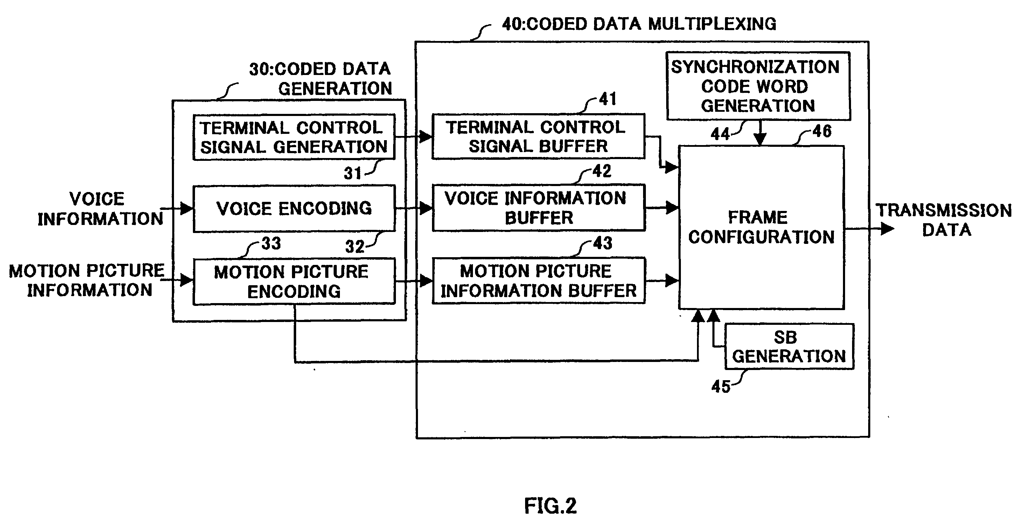

FIG. 2 is a block diagram indicating configuration of conventional variable length frame transmission apparatus. Besides, in the following description, the conventional variable length frame transmission apparatus is described while employing the INTER video packet.

The variable length frame transmission apparatus indicated in FIG. 2 includes a coded data generator 30 for coding various kinds of information, and a coded data multiplexer 40 for multiplexing to transmit various kinds of the coded data.

The coded data generator 30 includes a control signal generator 31, a voice coder 32, and a motion picture coder 33. The coded data multiplexer 40 has a control signal buffer 41, a voice information buffer 42, a motion picture information buffer 43, a synchronization code word generator 44, a SB generator 45, and a frame configuration section 46.

The control signal generator 31 generates a control signal for establishing communication between transmission side and reception side that is determined by inter-communication control protocol to write to the control signal buffer 41.

The voice coder 32 codes the voice information to write to the voice information buffer 42.

The motion picture coder 33 produces the video packet while coding the motion picture information to write to the motion picture information buffer 43. Further, the motion picture coder 33 outputs information indicating length of the video packet to the frame configuration section 46.

Respective buffers of the control signal buffer 41, the voice information buffer 42, and the motion picture information buffer 43 conserve the written data temporarily.

The synchronization code word generator 44 generates the synchronization code word which is multiplexed to the front position of the frame. The SB generator 45 generates redundant meaningless stuffing bit sequence.

The frame configuration section 46 configures a frame while employing the voice information held in the voice information buffer 42 and the motion picture information held in the motion picture information buffer 43 on the basis of length of the video packet as well as timing when the voice information is multiplexed. Subsequently, the frame configuration section 46 generates a header in which multiplex information and so forth are written, thus multiplexing the synchronization code word as well as the header to the front position of the frame.

Furthermore, the frame configuration section 46 multiplexes the stuffing bit sequence to the frame when enough information quantity for configuring frame is not held at respective buffers.

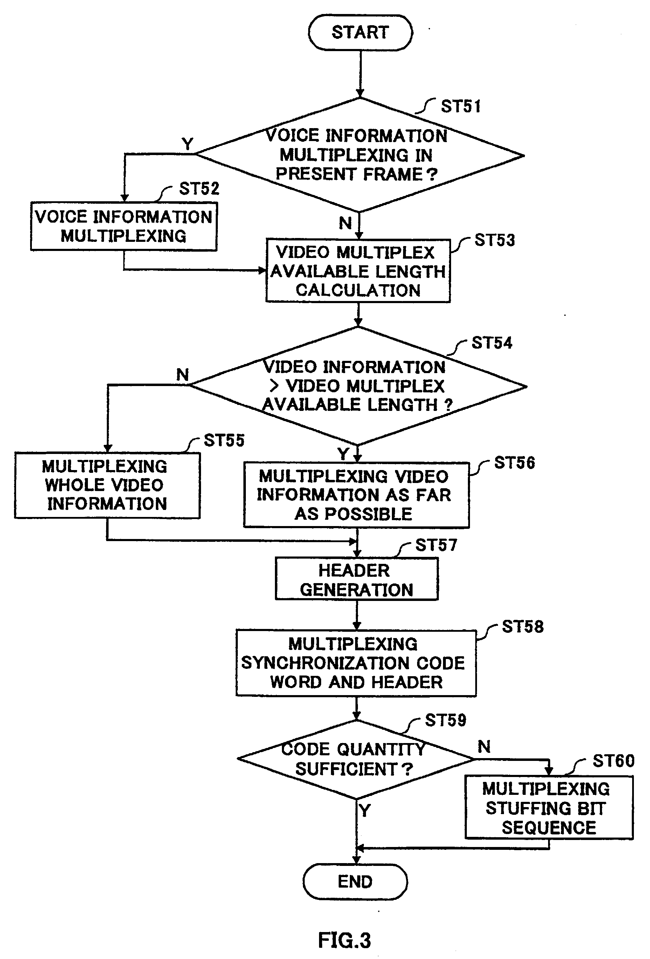

Subsequently, there is described about frame configuration procedure in the frame configuration section 46 of the conventional variable length frame transmission apparatus while employing flowchart of FIG. 3.

Firstly, in step (hereinafter referred to as ST) 51 to ST 52, the apparatus judges whether or not the voice information is multiplexed to the present frame. When the apparatus judges that multiplex is necessary, the apparatus multiplexes the voice information to the present frame.

Secondly, in ST 53, the apparatus subtracts length of a part to which the data is already multiplexed from the maximum length of the present frame. Thus, the apparatus calculates length capable of being multiplexed by the video information (hereinafter referred to as video multiplex available length) of the frame. In ST 54, the apparatus judges whether or not length of the video information is longer than the video multiplex available length.

In the result of judgement of ST 54, when length of the video information of the video packet is length of the video multiplex available length or less, the apparatus multiplexes all of the video information of the video packet in ST 55. While, in the result of judgement of ST 54, length of video information of the video packet is longer than length of the video multiplex available length, in ST 56, the apparatus segments length of the video information to multiplex as long as possible.

Subsequently, the apparatus generates header on the basis of multiplex result in ST 57. The apparatus multiplexes the synchronization code word and the header at the front position of the frame in ST 58. Then, in ST 59, the apparatus judges whether or not multiplexed information to the frame is sufficient in such a degree that there is no gap between the present frame and the next frame. The apparatus ends configuration of the present frame when the apparatus judges that the information quantity is sufficient.

In the result of judgement of ST 59, when the apparatus judges that the information quantity is insufficient, the apparatus multiplexes stuffing bit sequence so as to fill up the gap between frames, before ending frame configuration.

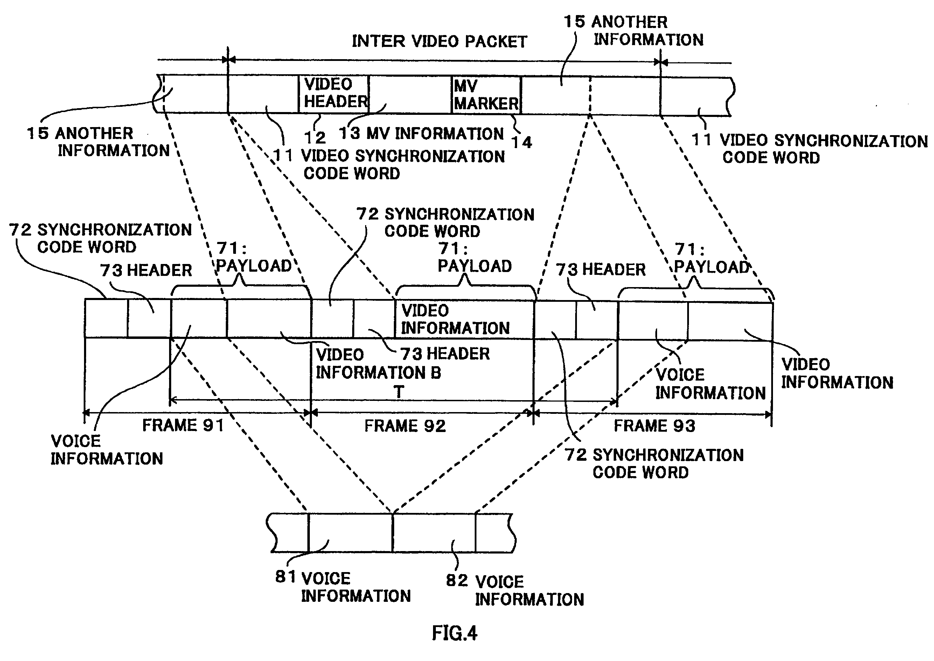

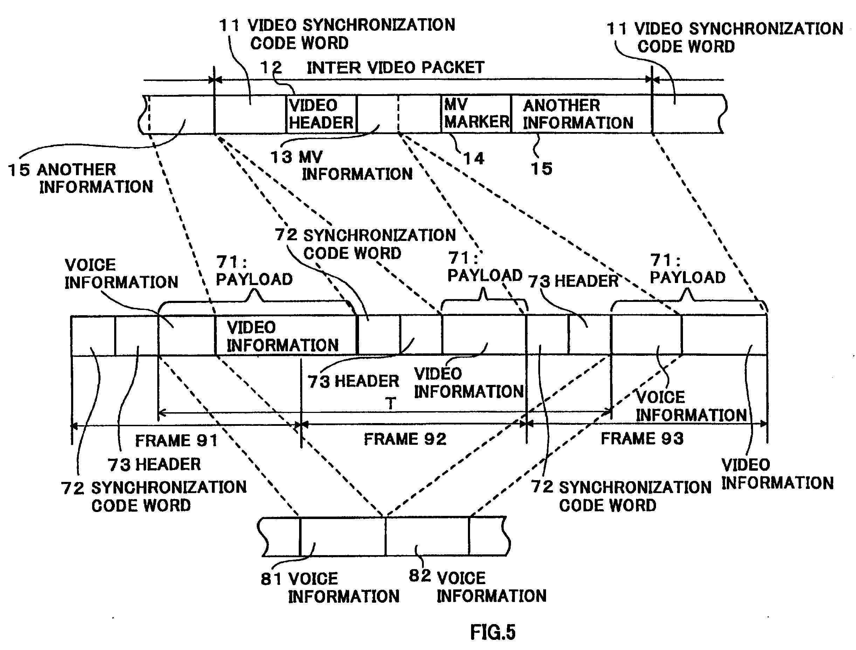

FIG. 4 and FIG. 5 are transmission frame configuration views of conventional variable length frame transmission apparatus. In FIG. 4 and FIG. 5, payload 71 to which the motion picture information, the voice information, and so forth are written is divided into appropriate length. The synchronization code word 72, and the header 73 are multiplexed to the front position of the divided payload 71. Then, the synchronization code word 72, the header 73, and the payload 71 are taken to be one unit, thus frame is configured with the synchronization code word 72, the header 73, and the payload 71 as one unit.

The synchronization code word 72 is known between the transmission side and the reception side. The synchronization code word is employed in order to detect the front position of the frame on the occasion of establishment of the synchronization.

Information indicating length of the payload 71, information (hereinafter, referred to as multiplex information) indicating kind of data written in the payload 71, and so forth are written in the header 73.

Voice information 81, 82 which have fixed length are included in data written in the payload 71. Further, interval T of timing that the voice information 81, 82 are multiplexed is fixed. In the frames 91, 93 including the voice information, the apparatus multiplexes the voice information to the front position of the payload, before multiplexing the video information behind the voice information. Further, in the frame 92 including no voice information, the apparatus multiplexes only the video information to the payload.

Here, since timing when the voice information is multiplexed and the maximum length of the frame are determined beforehand, when the packet data of the motion picture information does not fall within one frame, the relevant packet data is divided to be written over a plurality of frames.

In the conventional variable length frame transmission apparatus, since division position of the video packet is not regarded, in view of balance between the timing when the voice information is multiplexed and length of the packet data of the motion picture information, there exists cases where a part which is of unimportant information of the video packet is divided into a plurality of frames as indicated in FIG. 4, and where a part which is of important information of the video packet is divided into a plurality of frames as indicated in FIG. 5.

When the important information of the video packet is divided into a plurality of frames, in the reception side, if only one of the plurality of relevant frames can not be decoded, there occurs the problem that distorted picture is reproduced.

### Disclosure of Invention

An object of the present invention is to provide a variable length frame transmission apparatus and a variable length frame transmission method capable of preventing a matter that the important information is divided into a plurality of frames on the occasion of multiplexing of the transmission data.

The aforementioned object is achieved in such away that an important information of a video packet is compared with length to which video information is capable of being multiplexed, when an apparatus judges that the important information of the video packet is longer than the length available for multiplex, the apparatus multiplexes stuffing bit sequence to unoccupied part of a frame.

### Brief Description of Drawings

FIG. 1A is a configuration view of video packet coded sequence of INTER coded mode,
FIG. 1B is a configuration view of video packet coded sequence of INTRA coded mode,
FIG. 2 is a block diagram indicating a configuration of conventional variable length frame transmission apparatus,
FIG. 3 is a flowchart indicating frame configuration procedure of conventional variable length frame transmission apparatus,
FIG. 4 is a frame configuration view of transmission data output from conventional variable length frame transmission apparatus,
FIG. 5 is a frame configuration view of transmission data output from conventional variable length frame transmission apparatus,
FIG. 6 is a block diagram indicating configuration of a variable length frame transmission apparatus in conjunction with an embodiment 1 of the present invention,
FIG. 7 is a flowchart indicating frame configuration procedure of a variable length frame transmission apparatus in conjunction with an embodiment 1 of the present invention,
FIG. 8 is a flowchart indicating frame configuration procedure of a variable length frame transmission apparatus in conjunction with an embodiment 1 of the present invention,
FIG. 9 is a frame configuration view of a transmission data output from a variable length frame transmission apparatus in conjunction with an embodiment 1 of the present invention,
FIG. 10 is a block diagram indicating configuration of a variable length frame transmission apparatus in conjunction with a second embodiment, and
FIG. 11 is a flowchart indicating procedure for detecting length of video information A of a variable length frame transmission apparatus in conjunction with an embodiment 2 of the present invention.

### Best Mode for Carrying Out the Invention

Hereinafter, there will be described about an embodiment of the present invention in detail in accordance with the accompanying drawings. Furthermore, in the description hereinafter, a video synchronization code word at the front position to a MV marker in the INTER video packet that are important information are taken to be video information A. Also, a video synchronization code word at the front position to a DC marker in the INTRA video packet that are important information are taken to be video information A. Another information followed on the heel of the video information A with the exception of important information are taken to be video information B.

### (Embodiment 1)

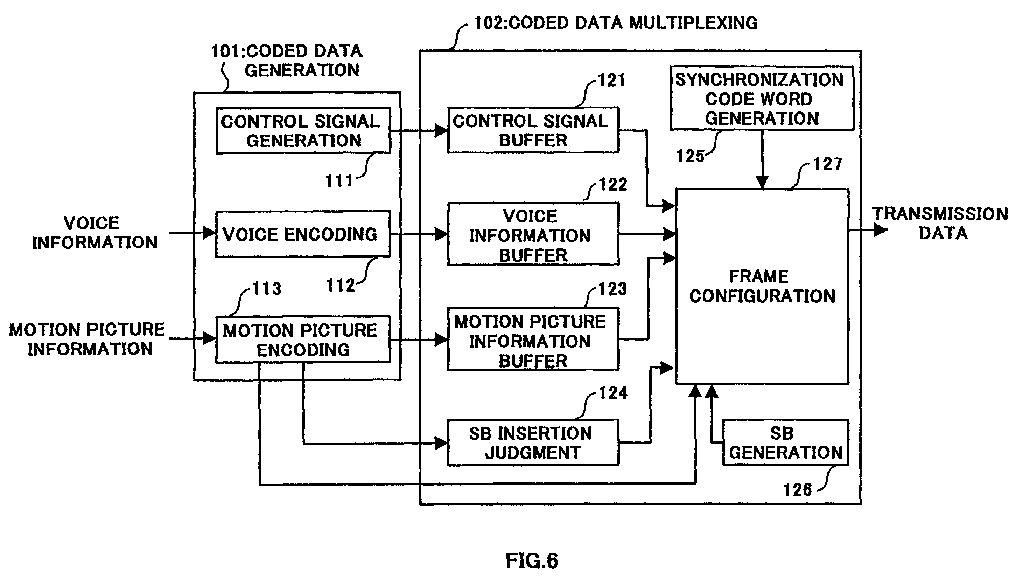

FIG. 6 is a block diagram for indicating configuration of a variable length frame transmission apparatus concerning the embodiment 1. Furthermore, in the following description of the present embodiment, the INTER video packet is employed.

The variable length frame transmission apparatus indicated in FIG. 6 includes a coded data generator 101 for coding various kinds of information, a coded data multiplexer 102 for multiplexing to transmit various kinds of coded data.

The coded data generator 101 includes a control signal generator 111, a voice coder 112, a picture coder 113. The coded data multiplexer 102 includes a control signal buffer 121, a voice information buffer 122, a motion picture information buffer 123, a SB insertion judgement section 124, a synchronization code word generator 125, a SB generator 126, and a frame configuration section 127.

The control signal generator 111 generates a control signal for establishing communication between a transmission side and a reception side that is determined by inter-communication control protocol before writing the control signal in the control signal buffer 121. The voice coder 112 codes voice information to write in the voice information buffer 122.

The motion picture coder 113 codes motion picture information to form a video packet before writing in the motion picture information buffer 123. Further, the motion picture coder 113 outputs information indicating length of the video packet to the frame configuration section 127, and outputs information indicating length of the video information A to the SB insertion judgement section 124.

Respective buffers of the control signal buffer 121, the voice information buffer 122, and the motion picture information buffer 123 hold therein written information temporarily.

The SB insertion judgement section 124 judges whether or not it is necessary to multiplex a stuffing bit sequence to the frame on the occasion of multiplexing of transmission data on the basis of the length of the video information A as well as timing multiplexing voice information. Concretely, an apparatus multiplexes voice information at next frame. On this occasion, the SB insertion judgement section 124 calculates available length for multiplex of the video information while subtracting length of synchronization code word and header from a distance between termination of former frame and start position of multiplex of voice information. When length of the video information A is longer than the video multiplex available length, the SB insertion judgement section 124 judges that it is necessary to multiplex stuffing bit sequence because if the video information A is multiplexed, the video information A is divided. Then, the SB insertion judgement section 124 outputs signal indicating judgement result to the frame configuration section 127.

The synchronization code word generator 125 generates a synchronization code word that is multiplexed to the front position of the frame. The SB generator 126 generates redundant stuffing bit sequence of meaningless.

The frame configuration section 127, on the basis of length of the video packet, timing for multiplexing the voice information, and judgement result of the SB insertion judgement result, configures frame while employing voice information held in the voice information buffer 122 and the motion picture information held in the motion picture information buffer 123, subsequently, generating header in which multiplex information and so forth are written, before multiplexing the synchronization code word and the header at the front position of the frame.

Moreover, the frame configuration section 127, when sufficient information quantity for configuring frame is not held in respective buffers, multiplexes the stuffing bit sequence to the frame as the occasion demands. While, the frame configuration section 127 multiplexes the stuffing bit sequence to the frame as the occasion demands in order to prevent the matter that the video information A to be the important information is divided.

Furthermore, the variable length frame transmission apparatus indicated in FIG. 6 writes data outputted from a data transmitter (not illustrated) in a data buffer (not illustrated) temporarily. Subsequently, the variable length frame transmission apparatus is also capable of multiplexing to transmit the above data in company with the voice information and / or the motion picture information.

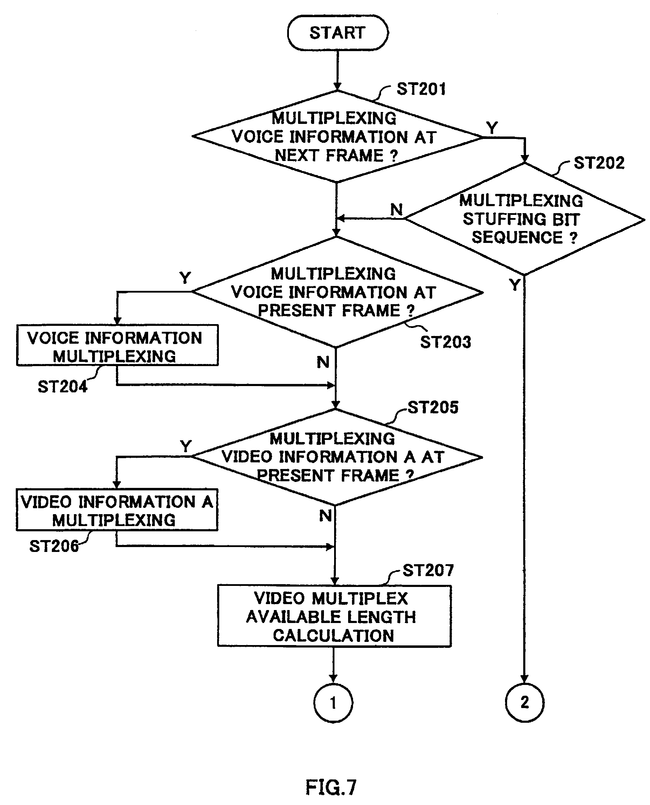

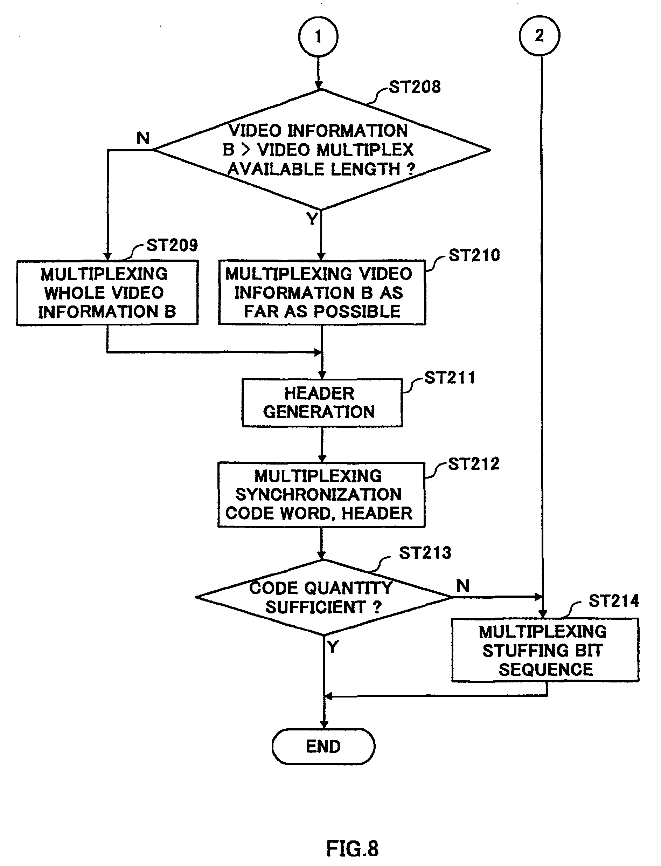

Next, there will be described about frame configuration procedure in the frame configuration section 127 of the variable length frame transmission apparatus concerning the present embodiment employing flowchart of FIG. 7 and FIG. 8.

Firstly, in ST 201, the apparatus judges whether or not the apparatus multiplexes voice information to next frame on the basis of timing for multiplexing the voice information.

From the judgement result of ST 201, when the apparatus judges that the apparatus is to multiplex the voice information to the next frame, in ST 202, the apparatus judges whether or not the apparatus multiplexes the stuffing bit sequence to the frame on the basis of signal indicating judgement result inputted from the SB insertion judgement section 124.

From the judgement result of ST 201, when the apparatus judges that the apparatus is not to multiplex the voice information to the next frame. Or from the judgement result of ST 202, when the apparatus does not multiplex the stuffing bit sequence to the frame. In ST 203 to ST 204, the apparatus judges whether or not the apparatus multiplexes the voice information to the present frame, subsequently, the apparatus multiplexes the voice information to the present frame if necessary.

Subsequently, in ST 205 to ST 206, the apparatus judges whether or not the apparatus multiplexes the video information A to the present frame, before multiplexing the video information A to the present frame if necessary.

Next, in ST 207, the apparatus calculates the video multiplex available length while subtracting length of a part to which data is already multiplexed from the maximum length of the present frame, subsequently, in ST 208, the apparatus judges whether or not length of the video information B is longer than the video multiplex available length.

In the judgement result of ST 208, when length of the video information B is the video multiplex available length or less, in ST 209, the apparatus multiplexes the whole video information B. While, in the judgement result of ST 208, when length of the video information B is longer than the video multiplex available length, in ST 210, the apparatus divides the video information B to multiplex as far as possible.

Next, in ST 211, the apparatus generates header on the basis of multiplex result, then, in ST 212, the apparatus multiplexes the synchronization code word and the header at the front position of the frame. Subsequently, in ST 213, the apparatus judges whether or not information quantity multiplexed to the frame is sufficient in the extent that a gap does not exist between the present frame and the next frame. When the apparatus judges that the information quantity is sufficient, the apparatus ends configuration of the present frame.

In the judgement result of ST 202, the apparatus judges that the apparatus multiplexes the stuffing bit sequence to the frame, or in the judgement result of ST 213, the apparatus judges that the information quantity is not sufficient. On this occasion of both cases, in ST 214, the apparatus multiplexes the stuffing bit sequence to fill up the gap as far as the next frame is started, thus, the apparatus ends frame configuration.

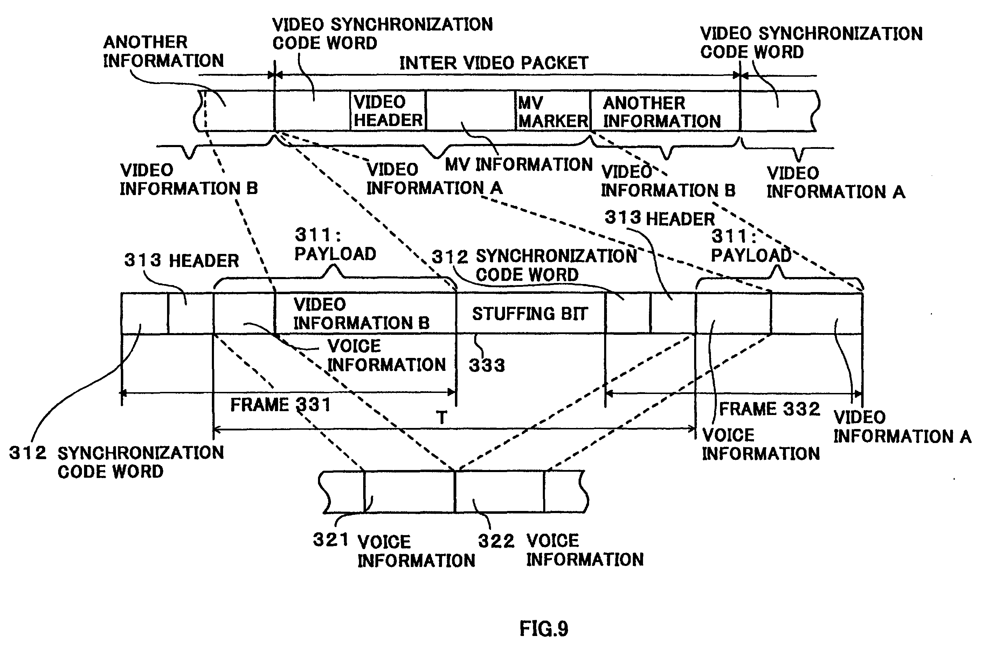

FIG. 9 is a frame configuration view of transmission data outputted from the variable length frame transmission apparatus in connection with the present embodiment.

In FIG. 9, a payload 311 into which the motion picture information, the voice information, and so forth are written is divided into appropriate length. The synchronization code word 312, and the header 313 are multiplexed to the front position of the divided payload 311. Then, a frame is configured with the synchronization code word 312, the header 313, and the payload 311 as one unit.

Voice information 321, 322 have fixed length from among the data written in the payload 311. Period T of timing to which period T the voice information 321, 322 are multiplexed is fixed. In frames 331, 332 including the voice information, the apparatus multiplexes the voice information to the front position of the payload, before multiplexing the video information behind the voice information.

Here, in FIG. 9, since the video information B which is multiplexed to the payload 311 of the frame 311 is long, a space between a termination of the frame 331 and a front end of the frame 332 becomes short. If the video information is multiplexed to the short space, it may occur that the video packet is divided at a part of the video information A. In such the case, the variable length frame transmission apparatus regarding the present embodiment multiplexes the stuffing bit sequence 333 between the frame 331 and the frame 332.

Thus, when the apparatus judges that the important information is long while comparing the important information of the video packet with length to which the video information is multiplexed, it is capable of preventing the matter that the important information is divided by multiplexing the stuffing bit sequence.

Furthermore, in the present embodiment, description is implemented while employing the INTER video packet, however, it is capable of being obtained the same effect in the INTRA video packet in connection with the present invention.

### (Embodiment 2)

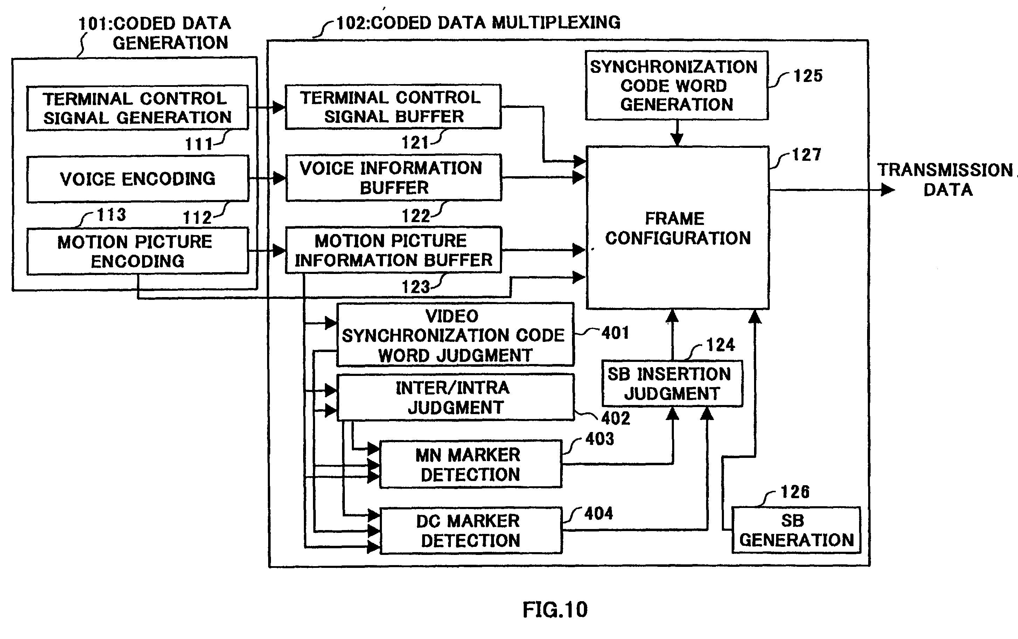

FIG. 10 is a block diagram indicating a configuration of a variable length frame transmission apparatus concerning an embodiment 2. In the variable length frame transmission apparatus indicated in FIG. 10, the coded data multiplexer 102 further includes a video synchronization code word judgement section 401, an INTER / INTRA judgement section 402, a MV marker detector 403, and a DC marker detector 404, in comparison with the variable length frame transmission apparatus of FIG. 6. Furthermore, in the variable length frame transmission apparatus indicated in FIG. 10, the same symbol as that of FIG. 6 is appended to omit description about configuration part in which operation and movement are common to that of the variable length frame transmission apparatus of FIG. 6.

The motion picture coder 113 differs from that of the embodiment 1 in that the motion picture coder 113 does not output information indicating length of the video information A to the SB insertion judgement section 124.

The video synchronization code word judgement section 401 pulls a part of the motion picture information held in the motion picture information buffer 123 as a candidate part of a video synchronization code word, before calculating correlation value between the video synchronization code word held at the inner part and the above candidate part. Subsequently, the video synchronization code word judgement section 401 judges a part which the correlation value becomes larger than a threshold value set beforehand as a video synchronization code word. Thus, the video synchronization code word judgement section 401 outputs position information of the video synchronization code word to the SB insertion judgement section 124. Furthermore, the correlation value is the number of bit which agrees with each other between two bit sequences.

The INTER / INTRA judgement section 402 decodes video head of the motion picture information held in the motion picture information buffer 123. The INTER / INTRA judgement section 402 judges whether the video packet is the INTER video packet or the video packet is the INTRA video packet. The INTER / INTRA judgement section 402 outputs judgement result either the MV marker detector 403 or the DC marker detector 404.

The MV marker detector 403 decodes parts behind of the video head of the INTER video packet successively to detect position of the MV marker, before outputting the position information of the MV marker to the SB insertion judgement section 124.

The DC marker 404 decodes parts behind the video header of the INTRA video packet successively to detect position of the DC marker, before outputting the position information of the DC marker to the SB insertion judgement section 124.

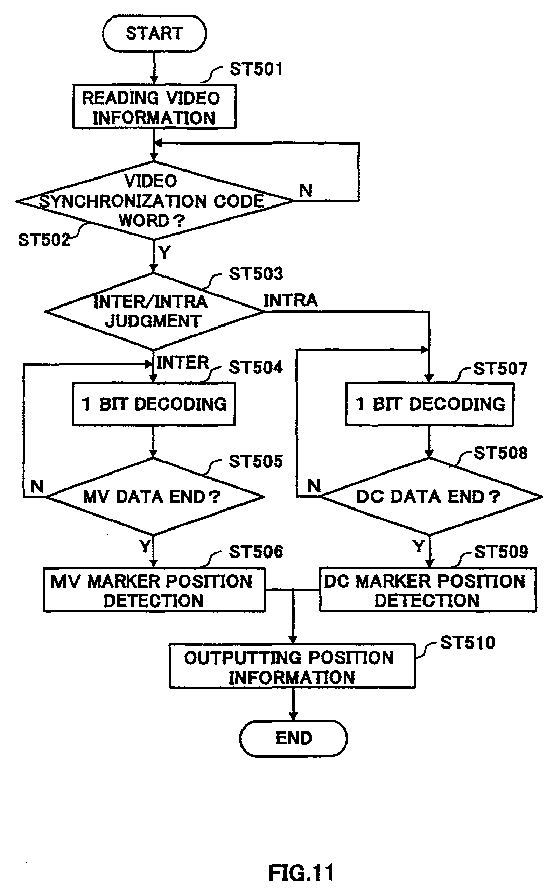

Next, there will be described about procedure for detecting length of the video information A of the variable length frame transmission apparatus regarding the present embodiment while employing flowchart of FIG. 11.

Firstly, in ST 501, the video synchronization code word judgement section 401, the INTER / INTRA judgement section 402, the MV marker detector 403, and the DC marker detector 404 read the motion picture information from the motion picture information buffer 123 respectively.

Next, in ST 502, the video synchronization code word judgement section 401 judges position of the video synchronization code word on the basis of the correlation value between the part of the motion picture information and the video synchronization code word held at the inner part. Then, the video synchronization code word judgement section 401 outputs judgement result to the INTER / INTRA judgement section 402.

Next, in ST 503, the INTER / INTRA judgement section 402 detects position of the video head of the motion picture information on the basis of position of the video synchronization code word to decode the video head, before judging whether the video packet is the INTER video packet or the video packet is the INTRA video packet.

Then, in the judgement result of ST 503, when the video packet is the INTER video packet, in ST 504 to step ST 506, the MV marker detector 403 decodes coded payload such as Huffman code and so forth successively to detect position of the MV marker.

On the other hand, in the judgement result of ST 503, when the video packet is the INTRA video packet, in ST 507 to ST 509, the DC marker detector 404 decodes coded payload such as Huffman code and so forth successively to detect position of the DC marker.

Then, in ST 510, the apparatus outputs position of the MV marker or position information of the DC marker to the SB insertion judgement section 124.

According to the above processing, the SB insertion judgement section 124 is capable of finding position of the MV marker of the INTER video packet or position of the DC marker of the INTRA video packet, therefore, the SB insertion judgement section 124 is capable of finding length of the video information A.

Thus, the apparatus decodes the motion picture information to detect length of the important information of the video packet. Thereby, the apparatus is capable of preventing the matter that the important information is divided while judging whether or not the apparatus multiplexes the stuffing bit sequence to the frame in the state that the coded data generator 101 has the same configuration as that of the conventional apparatus just as it is. For that reason, it is capable of exploiting the conventional apparatus.

As described-above, the variable length frame transmission apparatus and the variable length frame transmission method of the present invention compare the important information of the video packet with length capable of being multiplexed the video information. When the apparatus judges that the important information is long, the apparatus multiplexes the stuffing bit sequence. For that reason, it is capable of preventing the matter that the important information is divided into a plurality of frames on the occasion that the apparatus multiplexes the transmission data. According to the above matter, it is capable of reducing a number of the frame including the important information. In the reception side, it is capable of reducing possibility of reproducing distorted picture which occurs caused by the fact that reception side can not decode the important information.

The present description is based on the Japanese Patent Application No. HEI 11-053039 filed on March 1, 1999. The content thereof is included in the description.

## Claims

1. A variable length frame transmission apparatus comprising:
judgement means for multiplexing motion picture information to which important information is allocated as well as voice information transmitted periodically to a front position of a packet, and for judging whether or not the apparatus inserts redundant bit in front of a variable length frame configured while multiplexing a synchronization code word and a header to a front position of said variable length frame on the basis of length of said important information and timing of said voice information; and
frame configuration means for configuring said variable length frame on the basis of judgement result of said judgement means.

2. A variable length frame transmission apparatus as claimed in claim 1, wherein said judgement means judges that insertion of redundant bit is required when length of the important information is longer than length which is obtained in such a way of subtracting length of the synchronization code word and the header from distance between terminal position of a front frame and multiplex start position of the voice information multiplexed next, and said frame configuration means inserts the redundant bit into position from the terminal position of front frame to the front position of the synchronization code word.

3. A variable length frame transmission apparatus as claimed in claim 1, wherein said variable length frame transmission apparatus comprises a detector for detecting length of the important information while decoding coded motion picture information.

4. A reception apparatus for receiving signal transmitted from a variable length frame transmission apparatus to pull data, and said variable length frame transmission apparatus including judgement means for multiplexing motion picture information to which important information is allocated as well as voice information transmitted periodically to a front position of a packet, and for judging whether or not the apparatus inserts redundant bit in front of a variable length frame configured while multiplexing a synchronization code word and a header to a front position of said variable length frame on the basis of length of said important information and timing of said voice information, and frame configuration means for configuring said variable length frame on the basis of judgement result of said judgement means.

5. A base station apparatus for transmitting a variable length frame while mounting variable length frame transmission apparatus, and said variable length frame transmission apparatus including judgement means for multiplexing motion picture information to which important information is allocated as well as voice information transmitted periodically to a front position of a packet, and for judging whether or not the apparatus inserts redundant bit in front of a variable length frame configured while multiplexing a synchronization code word and a header to a front position of said variable length frame on the basis of length of said important information and timing of said voice information, and frame configuration means for configuring said variable length frame on the basis of judgement result of said judgement means.

6. A communication terminal apparatus for transmitting a variable length frame while mounting a variable length frame transmission apparatus, and said variable length frame transmission apparatus including judgement means for multiplexing motion picture information to which important information is allocated as well as voice information transmitted periodically to a front position of a packet, and for judging whether or not the apparatus inserts redundant bit in front of a variable length frame configured while multiplexing a synchronization code word and a header to a front position of said variable length frame on the basis of length of said important information and timing of said voice information, and frame configuration means for configuring said variable length frame on the basis of judgement result of said judgement means.

7. A variable length frame transmission method, comprising the steps of:
multiplexing motion picture information to which important information is allocated and voice information transmitted periodically to a front position of a packet;
judging whether or not the apparatus inserts redundant bit in front of a variable length frame configured while multiplexing a synchronization code word and a header to a front position of said variable length frame on the basis of length of said important information and timing of said voice information; and
configuring said variable length frame on the basis of judgement result.

8. A variable length frame transmission method as claimed in claim 7, wherein when length of the important information is longer than length which is obtained in such a way of subtracting length of the synchronization code word and the header from distance between terminal position of a front frame and multiplex start position of the voice information multiplexed next, inserting the redundant bit into position from the terminal position of front frame to the front position of the synchronization code word.

9. A variable length frame transmission method as claimed in claim 7, wherein said variable length frame transmission method detects length of the important information while decoding coded motion picture information.
